# EUROPÄISCHE PATENTSCHRIFT

(11) **EP 1 202 849 B1**
(45) Veröffentlichungstag und Bekanntmachung des Hinweises auf die Patenterteilung: **13.10.2004**
(21) Anmeldenummer: 00953084.1
(22) Anmeldetag: 24.07.2000
(51) Int. Cl.: B27N 3/10

(54) **VERFAHREN UND VORRICHTUNG ZUR HERSTELLUNG VON FORMKÖRPERN**
METHOD AND DEVICE FOR PRODUCING MOULDED PARTS
PROCEDE ET DISPOSITIF DE FABRICATION DE CORPS MOULES

(30) Priorität: 13.08.1999 DE 19938489
(43) Veröffentlichungstag der Anmeldung: 08.05.2002
(73) Patentinhaber: Metso Panelboard GmbH, 30559 Hannover (DE)
(72) Erfinder: HABIGHORST, Christoph, D-31832 Springe (DE); SCHWARZ, Hans-Günther, D-31832 Springe (DE)
(74) Vertreter: Manitz, Finsterwald & Partner GbR
(86) Internationale Anmeldenummer: PCT/EP2000/007077
(87) Internationale Veröffentlichungsnummer: WO 2001/012403

(56) Entgegenhaltungen:
- DE-A- 4 434 876
- DE-A- 19 730 501
- US-A- 5 415 821

## Beschreibung

Die vorliegende Erfindung betrifft ein Verfahren zur Herstellung von Formkörpern, insbesondere von Platten, aus mit mindestens einem Bindemittel versetzten Teilchen, wie beispielsweise lignozellulose- und/oder zellulosehaltigen Spänen, Fasern, zerkleinerten Strohteilchen, Reisschalen oder dergleichen, die auf eine bewegte Unterlage zu einem Vlies gestreut werden, das anschließend zunächst vorverdichtet und dann unter Hitzeeinwirkung zu einem Formkörper fertiggepreßt wird. Ferner ist die Erfindung auf eine Vorrichtung zur Durchführung dieses Verfahrens gerichtet.

Es ist bekannt, daß mit einem Bindemittel, beispielsweise einer organischen Isocyanatlösung, versetzte Vliesteilchen selbst im vorverdichteten Zustand mangels eines ausreichenden Kaltklebeeffektes nur verhältnismäßig lose zusammenhalten. Aufgrund dessen ergeben sich auf dem Transport des Vlieses in eine kontinuierlich oder diskontinuierlich arbeitende Fertigpresse Gefügeveränderungen im Vliesaufbau, die Betriebsstillstände zur Folge haben können. Dies gilt insbesondere im Bereich der Übergabestelle(n) von einem Vliesträger-Band zum nächsten, wenn das die Unterlage für das Vlies bildende Vliesträger-Bandsystem aus mehreren Vliesträger-Bändern ausgebildet ist. Aber auch durch Ankleben von Vliesteilchen an der Unterlage bzw. an auf das Vlies während des Transports einwirkenden Vorrichtungen, wie z.B. an Vorverdichtungseinheiten, können entsprechende Gefügeveränderungen im Vliesaufbau entstehen.

Aus der DE 44 34 876 A1 ist ein Verfahren sowie eine Vorrichtung der eingangs genannten Art bekannt. Dabei wird zunächst aus einer Feinspan-Spänemischung eine untere Deckschicht auf die bewegte Unterlage gestreut und anschließend zu einer Feinspanmatte vorverdichtet. Auf die vorverdichtete Feinspanmatte werden in Folge mehrere um 90° gegeneinander versetzte Schichten aus orientierten Langschnitzel für die Kernschicht gestreut, woraufhin anschließend aus einer weiteren Feinspan-Spänemischung zunächst die obere Deckschicht auf ein Hilfstreuband gestreut und zu einer zweiten Feinspanmatte vorverdichtet wird. Anschließend wird diese zweite Feinspanmatte auf die oberste Kernschichtlage abgelegt und damit die Pressgutmatte gebildet, die nach Überführung in den Hauptpressbereich zur Mehrschichtplatte verpresst und ausgehärtet wird.

Der vorliegenden Erfindung liegt die Aufgabe zugrunde, ein Verfahren sowie eine Vorrichtung der eingangs genannten Art zu schaffen, die einen durchgängig beschädigungslosen Transport des Vlieses bis zum fertiggepreßten Formkörper ermöglichen.

Ausgehend von einem Verfahren der eingangs genannten Art wird die das Verfahren betreffende Aufgabe dadurch gelöst, daß die Unterlage zumindest bereichsweise mit einer Trägerbahn abgedeckt wird, daß die Trägerbahn mit der Unterlage mitbewegt wird und daß die ein ein- oder mehrschichtiges Vlies bildenden Teilchen auf die auf der Unterlage aufliegende Trägerbahn aufgestreut werden. Der die Vorrichtung betreffende Teil der Aufgabe wird ausgehend von einer eingangs genannten Vorrichtung dadurch gelöst, daß eingangsseitig der Formstation eine Zuführeinheit für eine Trägerbahn vorgesehen ist und daß von der Zuführeinheit aus die Trägerbahn dem Obertrum des Vliesträger-Bandsystems zuführbar und auf dieses auflegbar ist.

Da die Trägerbahn, die die untere Breitseite des Vlieses abdeckt, im bisher sehr kritischen Bereich der Übergabestelle(n) für das Vlies nunmehr als stabile Abstützung wirkt, bleibt die Schichtdicke und das Gefüge des vorverdichteten Vlieses erhalten, so daß ein problemloser Langzeitbetrieb sichergestellt ist. Außerdem wird eine gleichmäßige Oberflächenstruktur und Rohdichteverteilung des zu einem Formkörper fertiggepreßten Vlieses erreicht, denn die die Unterseite des Vlieses abdeckende Trägerbahn verhindert auch die Gefahr des Verklebens von Vliesteilchen, insbesondere an Metalloberflächen der vor und in der Fertigpresse angeordneten Transportmittel.

Nach einer vorteilhaften Ausführungsform der Erfindung wird die Oberseite des auf die Unterlage gestreuten ein- oder mehrschichtigen Vlieses durch eine Abdeckbahn abgedeckt. Dadurch erhält das gestreute und vorverdichtete Vlies noch einen höhere Stabilität, so daß die Gefahr für eine Gefügeveränderung während des Transports noch weiter verringert wird. Zusätzlich wird auch an der Oberseite des zu einem Formkörper fertiggepreßten Vlieses eine gleichmäßige Oberflächenstruktur und Rohdichteverteilung erreicht, da auch die die Oberseite des Vlieses abdeckende Abdeckbahn die Gefahr des Verklebens von Vliesteilchen, insbesondere an Metalloberflächen der vor und in der Fertigpresse angeordneten Transportmittel und/oder Vorverdichtungseinheiten verhindert.

Bevorzugt können die Trägerbahn und/oder die Abdeckbahn als Papier-, Gewebe-, Kunststoffbahn oder dergleichen oder als Kombination hiervon ausgebildet sein. Vorteilhaft sind sie im wesentlichen flüssigkeitsdicht ausgebildet, um ein Durchdringen des Bindemittels durch die Trägerbahn und/oder Abdeckbahn und damit ein Ankleben der jeweiligen Bahn an im Transportweg angeordneten Elementen zu verhindern.

Nach einer weiteren bevorzugten Ausführungsform der Erfindung wird das Vlies in einer Schicht oder in mehreren Schichten gestreut, nach einem oder mehreren Streuvorgängen wenigstens eine gestreute Vliesschicht vorverdichtet und das vorverdichtete Vlies vor dem Fertigpressen nochmals als Einheit vorgepreßt. Durch das jeweilige Vorpressen entweicht die im vorverdichteten Vlies noch vorhandene Restluftmenge nahezu vollständig und ohne Verwirbelungen am Vlies. Im Ergebnis hiervon läßt sich ein solches Vlies mit einer höheren Durchlaufgeschwindigkeit als bisher insbesondere zu einem Plattenstrang fertigpressen, der sowohl hochwertige Oberflächen als auch eine gleichmäßige Rohdichteverteilung in Quer- und Längsrichtung hat. Dies gilt insbesondere, wenn das nochmalige Vorpressen unmittelbar vor dem Fertigpressen erfolgt.

Zweckmäßig ist es, die das ein- oder mehrschichtige Vlies bildenden Teilchen mit einer organischen Isocyanatlösung wie Polyisocyanat, insbesondere einem polymeren 4,4'-Methylendiisocyanat (PMDI), und/oder Stärken und/oder Ligninsulfonat und/oder Proteinen und/oder Polyolen und/oder Insektiziden und/oder Fungiziden und/oder Flammschutzmitteln und/oder Farb- und/oder Füllstoffen und/oder Reaktionsbeschleunigern für das Bindemittel zu versetzen. Außer den Reaktionsbeschleunigem für das Bindemittel kommt dabei den Zusatz- und Hilfsmitteln, die einen besseren-Zusammenhalt (tack) der Vliesteilchen gegen deren elastisches Zurückfedern herbeiführen, besondere Bedeutung zu.

Nach einem anderen Aspekt der Erfindung werden die fertigen Formkörper geschliffen und die beim Schleifen der fertigen Plattenbahn bzw. Platten anfallenden Papier-, Gewebe-, Kunststoff- oder dergleichen Teilchen einschließlich Schleifstaub in den Fertigungsprozeß rückgeführt und zusammen mit den Teilchen zur Bildung der Vliesschicht(en) wiederverwendet. Auch eventuell fehlerhafte Vliesabschnitte, die durch nicht in Zusammenhang mit dem der Erfindung zugrundeliegenden Problem stehende Ursachen, beispielsweise durch Streufehler, entstehen können, werden in zerkleinerter Form mit den Teilchen, die die Vliesschicht(en) bilden, vermischt.

Weitere vorteilhafte Merkmale der Erfindung sind in den Unteransprüchen angegeben und werden auch in der Beispielbeschreibung erläutert.

Die Erfindung wird nachfolgend anhand eines Ausführungsbeispiels unter Bezugnahme auf die Zeichnung näher erläutert; in dieser zeigt:
Fig. 1 eine schematische Seitenansicht einer erfindungsgemäß ausgebildeten Vorrichtung, und
Fig. 2 einen Ausschnitt einer mit dieser Vorrichtung hergestellten Platte im Querschnitt.

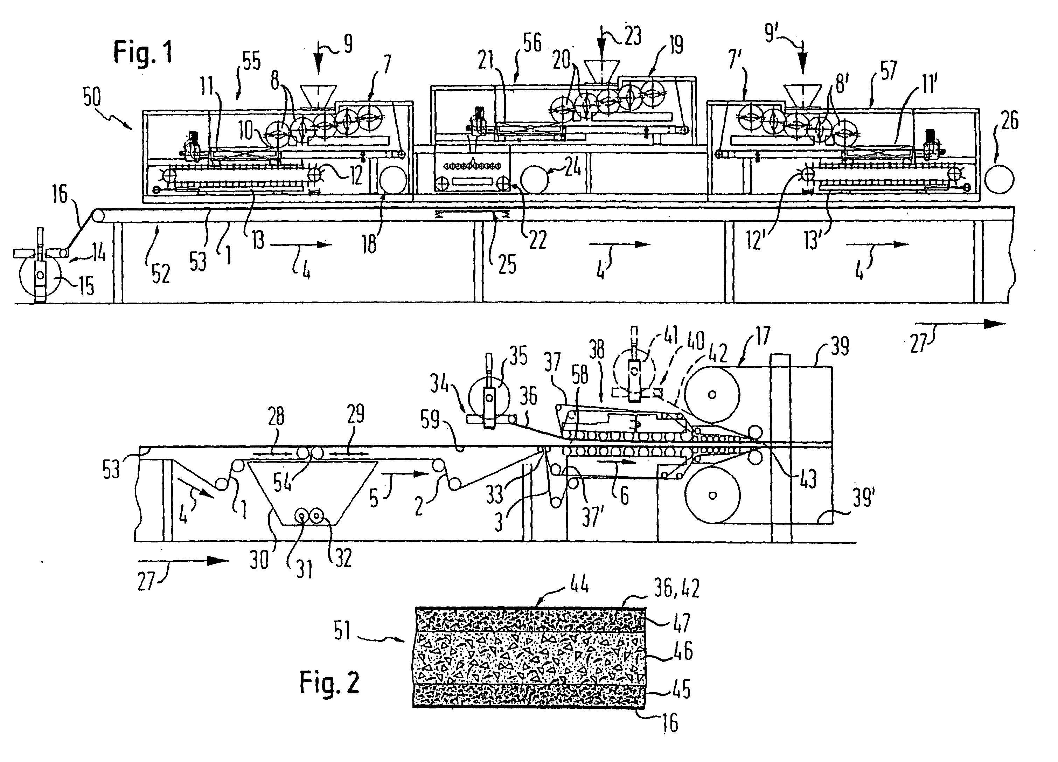

Figur 1 zeigt beispielhaft eine Formstation 50 mit drei Streuvorrichtungen 55, 56, 57 zur kontinuierlichen Herstellung von Platten aus mit mindestens einem polymeren 4,4'-Methylendiisocyanat (PMDI) versetzten Strohteilchen.

Als Vliesträger ist ein Vliesträger-Bandsystem 52 mit endlosen, luftundurchlässigen und hintereinander angeordneten Bänder 1, 2 und 3 vorgesehen, die über Umlenk- und Antriebswalzen geführt werden und sich kontinuierlich in Richtung der Pfeile 4, 5 und 6 bewegen.

Über dem Vliesträger-Band 1 ist eingangsseitig zunächst ein Dosierbunker 7 angeordnet, in dem mehrere Rückstreifrechen 8 untergebracht sind. In den Dosierbunker 7 werden mit mindestens einem polymeren 4,4'-Methylendiisocyanat (PMDI) versetzte Deckschicht-Strohteilchen eingegeben, wie es durch den Pfeil 9 angedeutet ist.

Dem Austrag 10 des Dosierbunkers 7 folgt eine Bandwaage 11, unterhalb der ein über zwei Umlenkrollen geführtes endloses Kratzerband 12 installiert ist, das gemäß dem deutschen Patent 197 16 130 mit einem hin und her bewegbaren Schwingsieb 13 zusammenwirkt. Damit ist es möglich, auf das Obertrum 53 des Vliesträger-Bandes 1 eine untere Deckschicht eines Vlieses 51 (Figur 2) aus mit mindestens einem polymeren 4,4'-Methylendiisocyanat (PMDI) versetzten Strohteilchen zu streuen.

Erfindungswesentlich ist, daß zuvor von einer Zuführeinheit 14, die im Ausführungsbeispiel wenigstens eine Rolle 15 aufweist, eine Trägerbahn 16, beispielsweise in Form einer Papier-, Gewebe-, Kunststoff- oder dergleichen Bahn oder eine Kombination hiervon abgezogen und auf das Obertrum 53 des Vliesträger-Bandes 1 geleitet wird. Die Bahn 16 bildet. eine stabile untere Abstützung des Vlieses 51 im Bereich der Übergangsstellen 54 und 33 vom Vliesträger-Band 1 zum Vliesträger-Band 2, vom Vliesträger-Band 2 zum Vliesträger-Band 3 und vom Vliesträger-Band 3 in eine beheizbare, kontinuierlich arbeitende Doppelband-Fertigpresse 17. Gleichzeitig verhindert die Bahn 16 ein Festkleben von Vliesteilchen an den vor und in der Fertigpresse 17 angeordneten Transportmitteln.

Der ersten Streuvorrichtung 55, die den Dosierbunker 7, die Bandwaage 11, das Kratzerband 12 und das hin und her bewegbare Schwingsieb 13 umfaßt, ist eine Vorverdichtungseinheit 18 zwecks Entlüftung der unteren Deckschicht des Vlieses 51 nachgeschaltet. Diese Einheit 18 kann aus einer oder mehreren Vorverdichtungswalzen mit oder ohne Endlosbändem bestehen, wobei eine geringe Vorverdichtung zwischen ca. 0,5 und 1 bar ausreicht.

Der Vorverdichtungseinheit 18 nachgeordnet ist die zweite Streuvorrichtung 56. Zu ihr gehören ein Dosierbunker 19, der mehrere Rückstreifrechen 20 enthält, eine Bandwaage 21 und ein Walzenstreukopf 22. In den Dosierbunker 19 werden in Richtung des Pfeiles 23 mit mindestens einem PMDI versetzte Mittelschicht-Strohteilchen eingegeben, egalisiert, verwogen und schließlich auf die vorverdichtete untere Deckschicht des Vlieses 51 aufgestreut.

Auf die zweite Streuvorrichtung 56 folgt eine Vorverdichtungseinheit 24, die wie die Vorverdichtungseinheit 18 aufgebaut ist. Der Vorverdichtungsdruck sollte jedoch zwischen ca. 1 und 1,5 bar betragen, um die Mittelschicht des Vlieses 51 stärker zu entlüften. Vorteilhaft ist auch eine zusätzliche Entlüftung der unteren Deckschicht und der Mittelschicht des Vlieses mittels eines Vibrationstisches 25 im Bereich des Walzenstreukopfes 22 an der Unterseite des Obertrums 53 des Vliesträger-Bandes 1.

Der Vorverdichtungseinheit 24 ist eine ausgangsseitige dritte Streuvorrichtung 57 mit einem Dosierbunker 7', mehreren Rückstreifrechen 8', einer Bandwaage 11', einem Kratzerband 12' und einem hin und her bewegbaren Schwingsieb 13' nachgeschaltet. Da die ausgangsseitige dritte Streuvorrichtung 57 entsprechend der eingangsseitig ersten Streuvorrichtung 55 ausgebildet ist, wurden die Bezugszeichen lediglich mit einem Strich versehen.

Mit der ausgangsseitigen dritten Streuvorrichtung 57 wird eine obere Deckschicht aus mit PMDI versetzten Strohteilchen gestreut. Sobald die obere Deckschicht auf die zusammen mit der unteren Deckschicht vorverdichtete Mittelschicht des Vlieses 51 aufgestreut ist, gelangt dieses mehrschichtige Vlies 51 in eine Vorverdichtungseinheit 26. Deren Aufbau entspricht jenem der Vorverdichtungseinheiten 18 und 24. Das gleiche gilt für die dortigen Vorverdichtungsdrücke.

Hinter der Vorverdichtungseinheit 26 wird das mehrschichtige Vlies 51 zusammen mit der Trägerbahn 16 in Richtung der Pfeile 27, die die Fertigungsrichtung in der Vorrichtung nach der Erfindung angeben, vom Obertrum 53 des Vliesträger-Bandes 1 auf das Obertrum 59 des Vliesträger-Bandes 2 einwandfrei übergeben. Der Abstand zwischen diesen Bändern 1, 2 kann in Doppelpfeilrichtung 28 und/ oder 29 vergrößert werden, um eventuell fehlerhafte Vliesabschnitte in einen unterhalb der Bänder 1, 2 vorgesehenen Auffangtrichter 30 aufzunehmen und mittels Rückführschnecken 31, 32 in den Fertigungsprozeß rückzuführen, wobei sie in zerkleinerter Form mit den Teilchen zur Bildung der Vliesschichten vermischt werden.

Oberhalb des Vliesträger-Bandes 2 und in der Nähe der Übergangsstelle 33 vom Vliesträger-Band 2 zum Vliesträger-Band 3 ist eine Zuführeinheit 34 vorgesehen, die im Beispiel wenigstens eine Rolle 35 aufweist, von der eine abgezogene Abdeckbahn 36, beispielsweise in Form einer Papier-, Gewebe-, Kunststoff- oder dergleichen Bahn oder eine Kombination hiervon, auf die Oberfläche des mehrschichtigen und vorverdichteten Vlieses 51 aufgelegt wird.

Der Zuführeinheit 34 nachgeschaltet ist eine Vorpresse 38 mit einem oberen und einem unteren Endlosband 37, 37' sowie die Fertigpresse 17, die ein oberes und ein unteres Endlosband 39, 39' umfaßt, zwischen denen ein Preßspalt 43 mit einem Einlaufmaul 58 zum Aufnehmen des Vlieses 51 ausgebildet ist.

Die Abdeckbahn 36 bildet einen wirksamen Schutz vor einem Festkleben von Vliesteilchen am Untertrum des oberen Endlosbandes 37 der Vorpresse 38 und am Untertrum des oberen Endlosbandes 39 der beheizbaren, kontinuierlich arbeitenden Doppelband-Fertigpresse 17.

Alternativ zu der Zuführeinheit 36 kann vorteilhaft auch eine Zuführeinheit 40 mit wenigstens einer Rolle 41 und Transportbahn 42 oberhalb der Vorpresse 38 angeordnet sein, wie es in Figur 1 durch gestrichelte Linien angedeutet ist, so daß die Transportbahn 42 erst am Beginn des Preßspaltes 43 der beheizbaren, kontinuierlich arbeitenden Doppelband-Fertigpresse 17 mit der Oberfläche des Vlieses 51 vereinigt wird.

Figur 2 entnimmt man einen Ausschnitt eines mit der erfindungsgemäßen Vorrichtung nach Figur 1 gestreuten Vlieses 51 bzw. einer entsprechen hergestellten Platte 44 im Querschnitt. Sie umfaßt eine mit einer Papier-, Gewebe-, Kunststoff- oder dergleichen Bahn 16 oder einer Kombination hiervon abgedeckte untere Deckschicht 45, eine Mittelschicht 46 und eine obere Deckschicht 47, die mit einer Papier-, Gewebe-, Kunststoff- oder dergleichen Bahn 36 bzw. 42 oder einer Kombination hiervon abgedeckt ist. Diese jeweiligen Abdeckungen können jedoch bei einem entsprechenden Schleifvorgang auch wieder abgeschliffen werden.

### Bezugszeichenliste

- 1: Vliesträger-Band
- 2: Vliesträger-Band
- 3: Vliesträger-Band
- 4: Pfeilrichtung
- 5: Pfeilrichtung
- 6: Pfeilrichtung
- 7,7': Dosierbunker
- 8,8': Rückstreifrechen
- 9,9': Pfeilrichtung
- 10: Austrag des Dosierbunkers 7
- 11,11': Bandwaage
- 12,12': Endloses Kratzerband
- 13,13': Schwingsieb
- 14: Zuführeinheit
- 15: Rolle
- 16: Trägerbahn
- 17: Doppelband-Fertigpresse
- 18: Vorverdichtungseinheit
- 19: Dosierbunker.
- 20: Rückstreifrechen
- 21: Bandwaage
- 22: Walzenstreukopf
- 23: Pfeilrichtung
- 24: Vorverdichtungseinheit
- 25: Vibrationstisch
- 26: Vorverdichtungseinheit
- 27: Pfeilrichtung
- 28,29: Doppelpfeilrichtung
- 30: Auffangtrichter
- 31,32: Rückführschnecken
- 33: Übergangsstelle
- 34: Zuführeinheit
- 35: Rolle
- 36: Abdeckbahn
- 37: Oberes Endlosband
- 37': Unteres Endlosband
- 38: Vorpresse
- 39: Oberes Endlosband
- 39': Unteres Endlosband
- 40: Zuführeinheit
- 41: Rolle
- 42: Abdeckbahn
- 43: Preßspalt
- 44: Platte
- 45: Untere Deckschicht
- 46: Mittelschicht
- 47: Obere Deckschicht
- 50: Formstation
- 51: Vlies
- 52: Vliesträger-Bandsystem
- 53: Obertrum
- 54: Übergangsstelle
- 55: Streuvorrichtung
- 56: Streuvorrichtung
- 57: Streuvorrichtung
- 58: Einlaufmaul
- 59: Obertrum

## Patentansprüche

1. Verfahren zur Herstellung von Formkörpern, insbesondere von Platten, aus mit mindestens einem Bindemittel versetzten Teilchen, wie beispielsweise lignozellulose- und/oder zellulosehaltigen Spänen, Fasern, zerkleinerten Strohteilchen, Reisschalen oder dergleichen, die auf eine bewegte Unterlage (52) zu einem Vlies (51) gestreut werden, das anschließend zunächst vorverdichtet und dann unter Hitzeeinwirkung zu einem Formkörper fertiggepreßt wird,
**dadurch gekennzeichnet,**
**daß** die Unterlage (52) zumindest bereichsweise mit einer Trägerbahn (16) abgedeckt wird, daß die Trägerbahn (16) mit der Unterlage (52) mitbewegt wird und daß die ein ein- oder mehrschichtiges Vlies (51) bildenden Teilchen auf die auf der Unterlage (52) aufliegende Trägerbahn (16) aufgestreut werden.

2. Verfahren nach Anspruch 1,
**dadurch gekennzeichnet,**
**daß** die Oberseite des auf die Unterlage (52) gestreuten ein- oder mehrschichtigen Vlieses (51) durch eine Abdeckbahn (36) abgedeckt wird.

3. Verfahren nach Anspruch 1 oder 2,
**dadurch gekennzeichnet,**
**daß** als Trägerbahn (16) und/oder als Abdeckbahn (36) eine Papier-, Gewebe- oder Kunststoffbahn oder eine Kombination hiervon verwendet wird.

4. Verfahren nach Anspruch 1, 2 oder 3,
**dadurch gekennzeichnet,**
**daß** eine im wesentlichen flüssigkeitsdichte Trägerbahn (16) und/oder Abdeckbahn (26) verwendet wird.

5. Verfahren nach einem der vorhergehenden Ansprüche,
**dadurch gekennzeichnet,**
**daß** das Vlies (51) in einer Schicht oder in mehreren Schichten (45,46,47) gestreut wird, nach einem oder mehreren Streuvorgängen wenigstens eine gestreute Vliesschicht vorverdichtet wird und daß das vorverdichtete Vlies (51) vor dem Fertigpressen nochmals als Einheit vorgepreßt wird.

6. Verfahren nach Anspruch 5,
**dadurch gekennzeichnet,**
**daß** das nochmalige Vorpressen des vorverdichteten Vlieses (51) unmittelbar vor dem Fertigpressen erfolgt.

7. Verfahren nach Anspruch 5 oder 6,
**dadurch gekennzeichnet,**
**daß** die Abdeckbahn (36) vor oder nach dem Vorpressen des vorverdichteten Vlieses (51) auf dessen Oberfläche aufgelegt wird.

8. Verfahren nach einem der vorhergehenden Ansprüche,
**dadurch gekennzeichnet,**
**daß** die das ein- oder mehrschichtige Vlies (51) bildenden Teilchen mit einer organischen Isocyanatlösung versetzt werden.

9. Verfahren nach Anspruch 8,
**dadurch gekennzeichnet,**
**daß** die das ein- oder mehrschichtige Vlies (51) bildenden Teilchen mit Polyisocyanat, insbesondere einem polymeren 4,4'-Methylendiisocyanat (PMDI), und/oder Stärken und/oder Ligninsulfonat und/oder Proteinen und/oder Polyolen und/oder Insektiziden und/oder Fungiziden und/oder Flammschutzmitteln und/oder Farb- und/oder Füllstoffen und/oder Reaktionsbeschleunigern für das Bindemittel versetzt werden.

10. Verfahren nach einem der vorhergehenden Ansprüche,
**dadurch gekennzeichnet,**
**daß** das Vlies (51) zu Platten fertiggepreßt wird.

11. Verfahren nach einem der vorhergehenden Ansprüche,
**dadurch gekennzeichnet,**
**daß** die fertigen Formkörper geschliffen werden und der beim Schleifen anfallende Schleifstaub, der Teilchen der Trägerbahn und/oder der Abdeckbahn enthalten kann, in den Fertigungsprozeß rückgeführt und zusammen mit den Teilchen zur Bildung der Vliesschicht(en) (45,46,47) wiederverwendet wird.

12. Verfahren nach einem der vorhergehenden Ansprüche,
**dadurch gekennzeichnet,**
**daß** das Vlies (51) auf eine kontinuierlich bewegte Unterlage (52) zur kontinuierlichen Herstellung der Formkörper gestreut wird.

13. Vorrichtung zur Herstellung von Formkörpern, insbesondere von Platten, aus mit mindestens einem Bindemittel versetzten Teilchen, wie beispielsweise lignozellulose- und/oder zellulosehaltigen Spänen, Fasern, zerkleinerten Strohteilchen. Reisschalen oder dergleichen, mit einer Formstation (50) zur Bildung eines aus den Teilchen bestehenden ein- oder mehrschichtigen Vlieses (51) auf einem unterhalb der Formstation (50) angeordneten Vliesträger-Bandsystem (52) das als bewegte Unterlage für die mit einem Bindemittel versetzten, von der Formstation (50) auf gestrenten Teilchen dient, einer Vorrichtung (18, 24, 26) zum Vorverdichten des gestreuten Vlieses (51) und einer sich an die Formstation (50) anschließenden Fertigpresse (17), insbesondere zum Durchführen des Verfahrens nach einem der vorhergehenden Ansprüche,
**dadurch gekennzeichnet,**
**daß** eingangsseitig der Formstation (50) eine Zuführeinheit (14) für eine Trägerbahn (16) vorgesehen ist und daß von der Zuführeinheit (14) aus die Trägerbahn (16) dem Obertrum (53) des Vliesträger-Bandsystems (52) zuführbar und auf dieses auflegbar ist.

14. Vorrichtung nach Anspruch 13,
**dadurch gekennzeichnet,**
**daß** die Zuführeinheit (14) zumindest eine Rolle (15) umfaßt, von der die Trägerbahn (16) abwickelbar ist.

15. Vorrichtung nach Anspruch 13 oder 14,
**dadurch gekennzeichnet,**
**daß** oberhalb des Vliesträger-Bandsystems (52) eine Zuführeinheit (34, 40) für eine Abdeckbahn (36, 42) vorgesehen ist und daß von der Zuführeinheit (34, 40) aus die Abdeckbahn (36, 42) auf die Oberfläche des auf dem Vliesträger-Bandsystems (52) angeordneten Vlieses (51) auflegbar ist.

16. Vorrichtung nach Anspruch 15,
**dadurch gekennzeichnet,**
**daß** die Zuführeinheit (34, 40) zumindest eine Rolle (35, 41) umfaßt, von der die Abdeckbahn (36) abwickelbar ist.

17. Vorrichtung nach einem der Ansprüche 13 bis 16,
**dadurch gekennzeichnet,**
**daß** zwischen der Vorrichtung (18, 24, 26) zum Vorverdichten des gestreuten Vlieses (51) und der Fertigpresse (17) eine Vorpresse (38) zum Vorpressen des vorverdichteten Vlieses (51) angeordnet ist.

18. Vorrichtung nach Anspruch 17,
**dadurch gekennzeichnet,**
**daß** die Zuführeinheit (34, 40) für die Abdeckbahn (36, 42) der Vorpresse (38) vorgeschaltet, nachfolgend oder oberhalb der Vorpresse (38) angeordnet ist.

19. Vorrichtung nach einem der Ansprüche 13 bis 18,
**dadurch gekennzeichnet,**
**daß** das Vliesträger-Bandsystem (52) zumindest zwei Vliesträger-Bänder (1, 2, 3) umfaßt, die jeweils an einer Übergangsstelle (33, 54) zum Übergeben des Vlieses von dem einen Vliesträger-Band (1, 2) zu dem sich daran anschließenden Vliesträger-Band (2, 3) aneinandergrenzen.

20. Vorrichtung nach Anspruch 19,
**dadurch gekennzeichnet,**
**daß** der Abstand zwischen den Vliesträger-Bändern (1, 2) einstellbar ist.

21. Vorrichtung nach Anspruch 19 oder 20,
**dadurch gekennzeichnet,**
**daß** die Zuführeinheit (34, 40) für die Abdeckbahn (36, 42) der Übergangsstelle (54, 33) nachfolgend angeordnet ist.

22. Vorrichtung nach einem der Ansprüche 13 bis 21 ,
**dadurch gekennzeichnet,**
**daß** die Formstation (50) eine oder mehrere Streuvorrichtungen (55, 56, 57), insbesondere mit einem Walzenstreukopf (22) oder dergleichen, umfaßt und daß jeder oder zumindest einem Teil der Streuvorrichtungen (55, 56, 57) eine Vorverdichtungseinheit (18, 24, 26) nachgeschaltet ist, die insbesondere aus einer oder mehreren Vorverdichtungswalzen mit oder ohne Endlosbändern besteht.

23. Vorrichtung nach Anspruch 22,
**dadurch gekennzeichnet ,**
**daß** an der Unterseite des Obertrums (53) des Vliesträger-Bandsystems (52) im Bereich zumindest eines Teils der Streuvorrichtungen (55, 56, 57), insbesondere des Walzenstreukopfes (22), jeweils ein Vibrationstisch (25) vorgesehen ist.

24. Vorrichtung nach einem der Ansprüche 13 bis 23,
**dadurch gekennzeichnet,**
**daß** die Fertigpresse (17) einen Preßspalt (43) und ein dem Preßspalt (43) vorgeschaltetes Einlaufmaul (58) umfaßt und daß ein Teil der Vorpresse (38) in das Einlaufmaul (58) bis nahe an den Beginn des Preßspaltes (43) der Fertigpresse (17) hineinragt.

25. Vorrichtung nach einem der Ansprüche 13 bis 24,
**dadurch gekennzeichnet,**
**daß** die Fertigpresse (17) als Doppelband-Fertigpresse ausgebildet ist.

26. Vorrichtung nach einem der Ansprüche 13 bis 25,
**dadurch gekennzeichnet,**
**daß** die Trägerbahn (16) und/oder die Abdeckbahn (36, 42) als Papier-, Gewebe- oder Kunststoffbahn oder als Kombination hiervon ausgebildet ist.

## Claims

1. A method for the manufacture of shaped bodies, in particular of boards, made of particles such as lingo-cellulose and/or cellulose containing chips, fibers, comminuted straw particles, rice husks or the like, which are admixed with at least one binding agent and which are scattered onto a moved base (52) to form a mat (51) which is subsequently initially pre-compacted and then finish pressed under the action of heat to form a molded part,
**characterized in that**
the base (52) is covered at least regionally with a carrier web (16) **in that** the carrier web (16) is moved with the base (52) and **in that** the particles which form a one layer mat (51) or a multi-layer mat (51) are scattered onto the carrier web (16) lying on the base (52).

2. A method in accordance with claim 1,
**characterized in that**
the upper side of the one layer or multi-layer mat (51) scattered onto the base (52) is covered over by a cover web (36).

3. A method in accordance with claim 1 or claim 2,
**characterized in that**
a paper web, a fabric web or a plastic web or a combination of them is used as the carrier web (16) and/or as the cover web (36).

4. A method in accordance with claim 1, claim 2 or claim 3,
**characterized in that**
a substantially fluid-tight carrier web (16) and/or cover web (36) is used.

5. A method in accordance with any one of the preceding claims,
**characterized in that**
the mat (51) is scattered in one layer or in a plurality of layers (45, 46, 47), **in that** at least one scattered mat layer is pre-compacted after one scattering process or a plurality of scattering processes and **in that** the pre-compacted mat (51) is pre-compressed once again as a unit prior to the finish pressing.

6. A method in accordance with claim 5,
**characterized in that**
the repeated pre-pressing of the pre-compacted mat (51) takes place directly before the finish pressing.

7. A method in accordance with claim 5 or claim 6,
**characterized in that**
the cover web (36) is laid onto the surface of the mat (51) before or after the pre-pressing of the pre-compacted mat (51).

8. A method in accordance with any one of the preceding claims,
**characterized in that**
the particles which form the single layer or multi-layer mat (51) are admixed with an organic isocyanate solution.

9. A method in accordance with claim 8,
**characterized in that**
the particles forming the one layer or multi-layer mat (51) are admixed with polyisocyanate, in particular a polymeric 4,4'-methylene diisocyanate (PMDI) and/or starches and/or lignin sulfonate and/or proteins and/or polyols and/or insecticides and/or fungicides and/or fire proofing agents and/or dyes and/or fillers and/or reaction accelerators for the binder.

10. A method in accordance with any one of the preceding claims,
**characterized in that**
the mat (51) is finish pressed into boards.

11. A method in accordance with any one of the preceding claims,
**characterized in that**
the finished shaped body is ground and the grinding dust arising during grinding, which can contain particles of the carrier web and/or of the cover web are led back into the manufacturing process and are re-used together with the particles for the formation of the mat layer(s) (45, 46, 47).

12. A method in accordance with any one of the preceding claims,
**characterized in that**
the mat (51) is scattered onto a continuously moved base (52) for the continuous manufacturing of the shaped bodies.

13. An apparatus for the manufacture of shaped bodies, in particular of boards from particles such as ligno-cellulose and/or cellulose containing chips, fibers, comminuted straw particles, rice husks or the like, which are admixed with at least one binding agent, having a forming station (50) for the formation of a one layer or multi-layer
mat (51) consisting of the particles on a mat carrier belt system (52) arranged beneath the forming station (50), the mat carrier belt system serving as a moved base for the particles admixed with binder and scattered by the forming station (50), having an apparatus (18, 24, 26) for the pre-compaction of the scattered mat (51) and having a finishing press (17) following the forming station (50) in particular for carrying out the A method in accordance with any one of the preceding claims,
**characterized in that**
a supply unit for a carrier web (16) is provided at the inlet side of the forming station (50) and **in that** the carrier web (16) can be supplied from the supply unit (14) to the upper run (53) of the mat carrier belt system (52) and can be laid on it.

14. An apparatus in accordance with claim 13,
**characterized in that**
the supply unit (14) includes at least one roll (15) from which the carrier web (16) can be unwound.

15. An apparatus in accordance with claim 13 or claim 14,
**characterized in that**
a supply unit (34, 40) for a cover web (36, 42) is provided above the mat carrier belt system (52) and **in that** cover web (36, 42) can be laid from the supply unit (34, 40) onto the surface of the mat (51) arranged on the mat carrier belt system (52).

16. An apparatus in accordance with claim 15,
**characterized in that**
the supply unit (34, 40) includes at least one roll (35, 41) from which the cover web (36) can be unwound.

17. An apparatus in accordance with any one of the claims 13 to 16,
**characterized in that**
a pre-press (38) for the pre-compression of the pre-compacted mat (51) is arranged between the apparatus (18, 24, 26) for the pre-compaction of the scattered mat (51) and the finishing pres (17).

18. An apparatus in accordance with claim 17,
**characterized in that**
the supply unit (34, 40) for the cover web (36, 42) is arranged before the pre-press (38), is arranged after the pre-press (38) or above the pre-press (38).

19. An apparatus in accordance with any one of the claims 13 to 18,
**characterized in that**
the mat carrier belt system (52) includes at least two mat carrier belts (1, 2, 3) which respectively border on one another at a transfer position (33, 54) for the transfer of the mat from one mat carrier belt (1, 2) to the following mat carrier belt (2, 3).

20. An apparatus in accordance with claim 19,
**characterized in that**
the spacing between the mat carrier belts (1, 2) is adjustable.

21. An apparatus in accordance with claim 19 or claim 20,
**characterized in that**
the supply unit (34, 40) for the cover web (36, 42) is arranged following the transfer position (54, 33).

22. An apparatus in accordance with any one of the claims 13 to 21,
**characterized in that**
the forming station (50) has one or more scattering devices (55, 56, 57), in particular with a roller scattering head (22) or the like and **in that** a pre-compaction unit (18, 24, 26) is inserted after each or at
least after some of the scattering devices (55, 56, 57) and consists in particular of one or more pre-compaction rolls with or without endless belts.

23. An apparatus in accordance with claim 22,
**characterized in that**
in each case a vibratory table (25) is provided at the lower side of the upper run (53) of the mat carrier belt system (52) in the region of at least some of the scattering devices (55, 56, 57).

24. An apparatus in accordance with any one of the claims 13 to 23,
**characterized in that**
the finishing press (17) includes a press gap and an inlet mouth (58) preceding the press gap (43) and **in that** a part of the pre-press (38) projects into the inlet mouth (58) up to close to the start of the press gap (43) of the finishing press (17).

25. An apparatus in accordance with one of the claims 13 to 24,
**characterized in that**
the finishing press (17) is formed as a double-belt finishing press.

26. An apparatus in accordance with any one of the claims 13 to 25,
**characterized in that**
the carrier web (16) and/or the cover web (36, 42) is formed as a paper web, a fabric web or a plastic web or as a combination of them.

## Revendications

1. Procédé de fabrication de corps moulés, en particulier de plaques, constitués par des particules mélangées à au moins un liant, comme par exemple des copeaux et des fibres contenant de la lignocellulose et/ou de la cellulose, des particules de paille et des écorces de riz broyées ou similaires, qui sont dispersées sur une base (52) en mouvement pour former un matelas (51) qui est ensuite tout d'abord précompacté et alors fini par pressage sous l'effet de la chaleur pour former un corps moulé, **caractérisé en ce que** la base (52) est recouverte, au moins par régions, par une nappe support (16), **en ce que** la nappe support (16) est en mouvement conjointement avec la base (52), et **en ce que** les particules formant un matelas (51) à une ou plusieurs couches sont dispersées sur la nappe support (16) reposant sur la base (52).

2. Procédé selon la revendication 1, **caractérisé en ce que** la face supérieure du matelas (51) à une ou plusieurs couches, dispersé sur la base (52), est recouverte par une nappe de recouvrement (36).

3. Procédé selon l'une ou l'autre des revendications 1 et 2, **caractérisé en ce qu'**on utilise à titre de nappe support (16) et/ou à titre de nappe de recouvrement (36) une bande de papier, de tissu ou de matière plastique ou une combinaison de ces matériaux.

4. Procédé selon l'une des revendications 1, 2 et 3, **caractérisé en ce qu'**on utilise une nappe support (16) et/ou une nappe de recouvrement (36) sensiblement étanche(s) aux liquides.

5. Procédé selon l'une des revendications précédentes, **caractérisé en ce que** le matelas (51) est dispersé en une couche ou en plusieurs couches (45, 46, 47), après une ou plusieurs opérations de dispersion, on précompacte au moins une couche de matelas dispersée, et **en ce qu'**avant la finition par pressage, le matelas (51) précompacté est encore précomprimé à nouveau en tant qu'unité.

6. Procédé selon la revendication 5, **caractérisé en ce que** la nouvelle précompression du matelas (51) précompacté a lieu immédiatement avant la finition par pressage.

7. Procédé selon l'une ou l'autre des revendications 5 et 6, **caractérisé en ce que**, avant ou après la précompression du matelas (51) précompacté, la nappe de recouvrement (36) est posée sur la surface de celui-ci.

8. Procédé selon l'une des revendications précédentes, **caractérisé en ce que** les particules formant le matelas (51) à une ou plusieurs couches sont mélangées à une solution organique d'isocyanate.

9. Procédé selon la revendication 8, **caractérisé en ce que** les particules formant le matelas (51) à une ou plusieurs couches sont mélangées avec du polyisocyanate, en particulier avec un diisocyanate de 4,4'-méthylène polymère et/ou des amidons et/ou du sulfonate de lignine et/ou des protéines et/ou des polyalcools et/ou des insecticides et/ou des fongicides et/ou des agents ignifuges et/ou des colorants et/ou des matières de charge et/ou des accélérateurs de réaction pour le liant.

10. Procédé selon l'une des revendications précédentes, **caractérisé en ce que** le matelas (51) est fini par pressage pour former des plaques.

11. Procédé selon l'une des revendications précédentes, **caractérisé en ce que** les corps moulés finis sont poncés, et la poussière de ponçage produite pendant le ponçage, qui peut contenir des particules de la nappe support et/ou de la nappe de recouvrement, est ramenée dans le processus de production et réutilisée conjointement avec les particules servant à la formation de la/des couche(s) (45, 46, 47) de matelas.

12. Procédé selon l'une des revendications précédentes, **caractérisé en ce que** le matelas (51) est dispersé sur une base (52) en mouvement continu pour la fabrication en continu des corps moulés.

13. Dispositif de fabrication de corps moulés, en particulier de plaques, constituées par des particules mélangées à au moins un liant, comme par exemple des copeaux et fibres contenant de la lignocellulose et/ou de la cellulose, des particules de pailles et écorces de riz broyées ou similaires, comportant une station de moulage (50) pour former un matelas (51) à une ou plusieurs couches, constitué par les particules, sur un système à bande transporteuse de matelas (52) agencé au-dessous de la station de moulage (50), système qui sert de base en mouvement pour les particules mélangées à un liant et dispersées par la station de moulage (50), comportant un dispositif (18, 24, 26) de précompactage, du matelas (51) dispersé et une presse de finition (17) se raccordant à la station de moulage (50), en particulier pour mettre en oeuvre le procédé selon l'une des revendications précédentes, **caractérisé en ce que** du côté entrée de la station de moulage (50) est prévue une unité d'amenée (14) pour une nappe support (16), et **en ce que** depuis l'unité d'amenée (14), la nappe support (16) peut être amenée au brin supérieur (53) du système de bande transporteuse de matelas (52) et être posée sur celui-ci.

14. Dispositif selon la revendication 13, **caractérisé en ce que** l'unité d'amenée (14) comprend au moins un rouleau (15) depuis lequel la nappe support (16) peut être déroulée.

15. Dispositif selon l'une ou l'autre des revendications 13 et 14, **caractérisé en ce qu'**au-dessus du système de bande transporteuse de matelas (52) est prévue une unité d'amenée (34, 40) pour une nappe de recouvrement (36, 42), et **en ce que** depuis l'unité d'amenée (34, 40), la nappe de recouvrement (36, 42) peut être posée sur la surface du matelas (51 ) agencé sur le système de bande transporteuse de matelas (52).

16. Dispositif selon la revendication 15, **caractérisé en ce que** l'unité d'amenée (34, 40) comprend au moins un rouleau (35, 41) depuis lequel la nappe de recouvrement (36) peut être déroulée.

17. Dispositif selon l'une des revendications 13 à 16, **caractérisé en ce qu'**une presse de préformage (38) pour préformer le matelas (51) précompacté est agencée entre le dispositif (18, 24, 26) de précompactage du matelas (51) dispersé et la presse de finition (17).

18. Dispositif selon la revendication 17, **caractérisé en ce que** l'unité d'amenée (34, 40) pour la nappe de recouvrement (36, 42) est montée devant, derrière ou au-dessus de la presse de préformage (38).

19. Dispositif selon l'une des revendications 13 à 18, **caractérisé en ce que** le système à bande transporteuse de matelas (52) comprend au moins deux bandes transporteuses de matelas (1, 2, 3) qui sont adjacentes les unes aux autres à un point de passage (33, 54) respectif pour délivrer le matelas depuis une bande transporteuse de matelas (1, 2) à une bande transporteuse de matelas (2, 3) s'y raccordant.

20. Dispositif selon la revendication 19, **caractérisé en ce que** la distance entre les bandes transporteuses de matelas (1, 2) est réglable.

21. Dispositif selon l'une ou l'autre des revendications 19 et 20, **caractérisé en ce que** l'unité d'amenée (34, 40) pour la nappe de recouvrement (36, 42) est agencée derrière le point de passage (54, 33).

22. Dispositif selon l'une des revendications 13 à 21, **caractérisé en ce que** la station de moulage (50) comprend un ou plusieurs dispositifs de dispersion (55, 56, 57), en particulier avec une tête de dispersion en rouleau ou similaire, et **en ce que** derrière chaque partie, ou au moins une partie, des dispositifs de dispersion (55, 56, 57) est montée une unité de précompactage (18, 24, 26) qui est constituée en particulier par un ou plusieurs rouleau(x) de précompactage avec ou sans bande sans fin.

23. Dispositif selon la revendication 22, **caractérisé en ce qu'**il est prévu au moins une table de vibration (25) respective sur la face inférieure du brin supérieur (53) du système de bande transporteuse de matelas (52) dans la région d'au moins une partie des dispositifs de dispersion (55, 56, 57), en particulier de la tête de dispersion en rouleau (22).

24. Dispositif selon l'une des revendications 13 à 23, **caractérisé en ce que** la presse de finition (17) comprend une fente de presse (43) et une bouche d'entrée (58) montée devant la fente de presse (43), et **en ce qu'**une partie de la presse de préformage (38) fait saillie dans la bouche d'entrée (58) jusqu'à proximité du début de la fente de presse (43) de la presse de finition (17).

25. Dispositif selon l'une des revendications 13 à 24, **caractérisé en ce que** la presse de finition (17) est réalisée sous forme de presse de finition à double bande.

26. Dispositif selon l'une des revendications 13 à 25, **caractérisé en ce que** la nappe support (16) et/ou la nappe de recouvrement (36, 42) est réalisée sous forme de bande de papier, de tissu ou de matière plastique ou d'une combinaison de ces matériaux.
